(19)

Europäisches Patentamt
European Patent Office
Office européen des brevets

(11) **EP 3 038 249 A1**

(12) **EUROPEAN PATENT APPLICATION**
published in accordance with Art. 153(4) EPC

(43) Date of publication:
**29.06.2016 Bulletin 2016/26**

(21) Application number: **13891946.9**

(22) Date of filing: **19.08.2013**

(51) Int Cl.:
*H02P 21/00* (2016.01)     *H02P 25/06* (2016.01)
*H02P 27/04* (2006.01)

(86) International application number:
**PCT/JP2013/072116**

(87) International publication number:
**WO 2015/025356 (26.02.2015 Gazette 2015/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Yaskawa Denki Kitakyushu-shi, Fukuoka 806-0004 (JP)**

(72) Inventor: **TAKASE, Yoshiyasu**
**Kitakyushu-shi**
**Fukuoka 806-0004 (JP)**

(74) Representative: **Grünecker Patent- und**
**Rechtsanwälte**
**PartG mbB**
**Leopoldstraße 4**
**80802 München (DE)**

(54) **MOTOR DRIVE SYSTEM AND MOTOR CONTROL DEVICE**

(57)     A motor drive system includes a motor, a motor control device, and a sensor that detects torque or acceleration of the motor. The motor control device includes an estimating unit configured to estimate at least one of speed and position of the motor, and a current control unit configured to control current to be supplied to the motor based upon an estimation result by the estimating unit. The estimating unit includes first and second esti- mating units, and derives an estimated value based upon estimation results by the first and second estimating units. The first estimating unit estimates based upon a detection signal detected by the sensor and a high-frequency component superimposed on an output current to the motor. The second estimating unit estimates from an estimation result of induced voltage of the motor.

FIG.6B

**Description**

Field

The embodiment of the disclosure relates to a motor drive system and a motor control device.

Background

Conventionally, in a system including a motor, when drive control of the motor is conducted, it is common using a position sensor such an encoder or the like to detect position and speed of the motor (rotation angle and rotation speed) (e.g., see Patent Literature 1).

Citation List

Patent Literature

Patent Literature 1: Japanese Laid-open Patent Publication No. 2009-095154

Summary

Technical Problem

However, the position sensor such as an encoder or the like is slightly flawed in terms of its environmental resistance against oscillation and impact and is expensive. On the other hand, for these recent years, a system using the so-called encoderless motor, which obtains position and speed of the motor from voltage and current by the motor, has come to be known, but such is prone to fail to fully compensate for torque ripple.
An aspect of the embodiments has been achieved in the light of the aforementioned, and an object of the embodiments is to provide a motor drive system and a motor control device that are superb in environmental resistance and able to be fabricated at reduced costs.

Solution to Problem

A motor drive system according to an aspect of the embodiments includes a motor, a motor control device that controls the motor, and a sensor that detects torque or acceleration of the motor. The motor control device includes an estimating unit configured to estimate at least one of speed and position of the motor, and a current control unit configured to control current to be supplied to the motor based on an estimation result by the estimating unit. The estimating unit includes first and second estimating units. The first estimating unit estimates at least one of the speed and position of the motor based upon a detection signal detected by the sensor and a high-frequency component superimposed on an output current to the motor. The second estimating unit estimates induced voltage of the motor and at least one of the speed and position of the motor from an estimated result of the induced voltage. Then, the estimating unit derives an estimated value of at least one of the speed and position of the motor based upon estimation results by the first and second estimating units.

Advantageous Effects of Invention

According to an aspect of the embodiments, highly reliable motor drive system and motor control device superb in environmental resistance and expectable to enhance operation efficiency can be implemented.

Brief Description of Drawings

FIG. 1 is a diagram illustrating an example of a robot to which a motor drive system according to an embodiment is applied.

FIG. 2 is a diagram illustrating a configuration example of the motor drive system according to the embodiment.
FIG. 3 is a diagram illustrating an arrangement of a torque sensor.
FIG. 4 is a diagram illustrating a sensor model where the inter-shaft type torque sensor illustrated in FIG. 2 is approximated to a torsion spring.
FIG. 5A is a block diagram illustrating an example of the motor drive system.

FIG. 5B is a block diagram illustrating another example of the motor drive system.

FIG. 6A is a diagram illustrating an example of a control unit included in a motor control device according to the embodiment.

FIG. 6B is a diagram illustrating an estimating unit of the control unit.

FIG. 7A is a diagram illustrating another configuration example of the control unit included in the motor control device.

FIG. 7B is a diagram illustrating the estimating unit in the control unit of the configuration example.

FIG. 8 is a diagram illustrating a relation (Example 1) among a high-frequency current command, a high-frequency component of the torque, and a phase error.

FIG. 9 is a diagram illustrating a relation (Example 2) among the high-frequency current command, the high-frequency component of the torque, and the phase error.

FIG. 10 is a diagram illustrating a motor drive system according to another embodiment.

FIG. 11A is a diagram illustrating another embodiment of the estimating unit in the control unit.

FIG. 11B is a diagram illustrating further another embodiment of the estimating unit in the control unit.

FIG. 11C is a diagram illustrating still another embodiment of the estimating unit in the control unit.

FIG. 12A is a diagram illustrating a relation between a speed estimated from the high-frequency torque and a speed estimated from the induced voltage.

FIG. 12B is a diagram illustrating a relation between an estimated speed after compensation and a speed estimated from the high-frequency torque.

FIG. 13 is a diagram illustrating a configuration of the motor drive system using a linear motor.

FIG. 14 is a diagram illustrating a configuration example of the control unit for the linear motor illustrated in FIG. 13.

FIG. 15A is a diagram illustrating another configuration of the motor drive system using the linear motor.

FIG. 15B is a diagram illustrating still another configuration of the motor drive system using the linear motor.

FIG. 15C is a diagram illustrating further another configuration of the motor drive system using the linear motor.

Description of Embodiments

With reference to the accompanying drawings, embodiments of a motor drive system and a motor control device according to the disclosure will now be described in detail below. The disclosure is not limited to the embodiments set forth below.

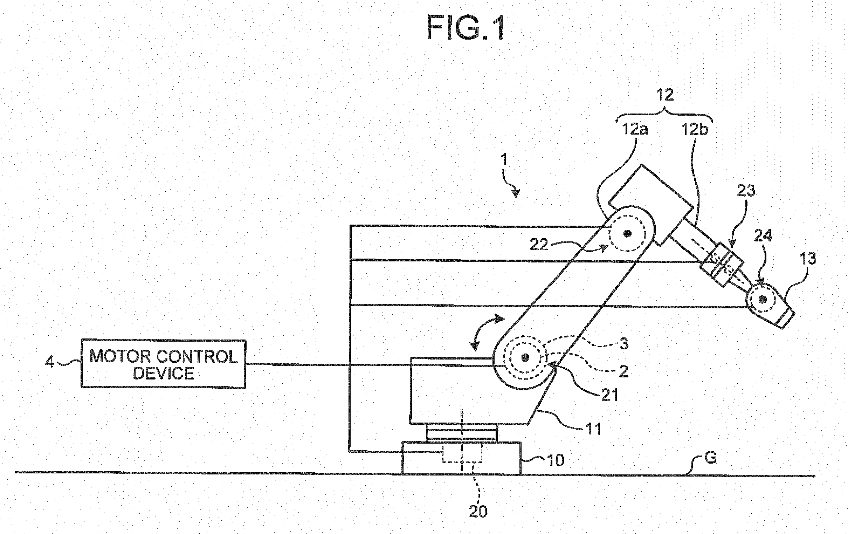

FIG. 1 is a diagram illustrating an example of a robot 1 to which a motor drive system according to an embodiment is applied. In the following, the directions substantially perpendicular to a mount surface G where the robot 1 is mounted are sometimes expressed as upward/downward directions.

The robot 1 is, as illustrated in the drawing, includes a trunk 11 that is attached rotatably in horizontal directions to a base 10 via a turning part 20. It also includes an arm 12 connected to work in cooperation with the trunk 11, and a wrist 13 provided at the leading end of the arm 12. At the leading end of the wrist 13, an end-effector (not illustrated in the drawing) according to a use is appropriately coupled thereto.

The arm 12 and the wrist 13 are arranged rotatably around their respective axes via first to fourth joints 21 to 24, respectively. The arm 12 includes a first arm member 12a upward/downward pivotably connected to the trunk 11 via the first joint 21 and a second arm member 12b upward/downward pivotably connected to the leading end of the first arm member 12a via the second joint 22.

The wrist 13 is connected rotatably about the axis to the second arm member 12b via the third joint 23 and connected upward/downward pivotably to the same via the fourth joint 24.

Components from the turning part 20 to the first to fourth joints 21 to 24 house their respective actuators inside, which drive the trunk 11, the arm 12, and the wrist 13 serving as movable members. Each of the actuators for the robot 1 according to the present embodiment is arranged to have a three-phase AC motor 2 (referred to as 'motor 2' hereinafter) and a torque sensor 3. Such motors 2 and torque sensors 3 are, as illustrated in the drawing, electrically connected to a motor control device 4 that controls the motors 2 and their drive operation.

Now, the motor control device 4 and the motor drive system including the same will now be described.

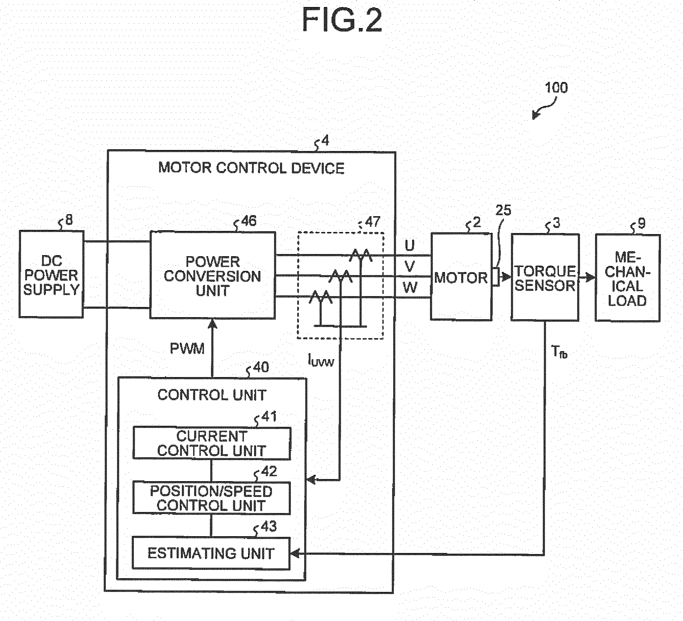

FIG. 2 is a diagram illustrating a configuration example of the motor drive system according to the embodiment. As illustrated in the drawing, a motor drive system 100 includes the motor 2, the torque sensor 3, and the motor control device 4 as all mentioned above. The motor 2 is, for instance, any of permanent magnet synchronous electric motors including IPM (interior permanent magnet) motors, SPM (surface permanent magnet) motors, and the like. To an output shaft 25 of such a motor 2, a mechanical load 9 is coupled via the torque sensor 3.

Meanwhile, the motor 2 may be a motor generator or a generator with a power generating capability, without limitations to the motors with the driving function. For example, the motor 2 may be a generator connected to a windmill rotor.

The torque sensor 3 is provided between the output shaft 25 of the motor 2 and the mechanical load 9 and detects the torque applied to the output shaft 25 of the motor 2 to output a detected torque signal $T_{fb}$ according to the detection results.

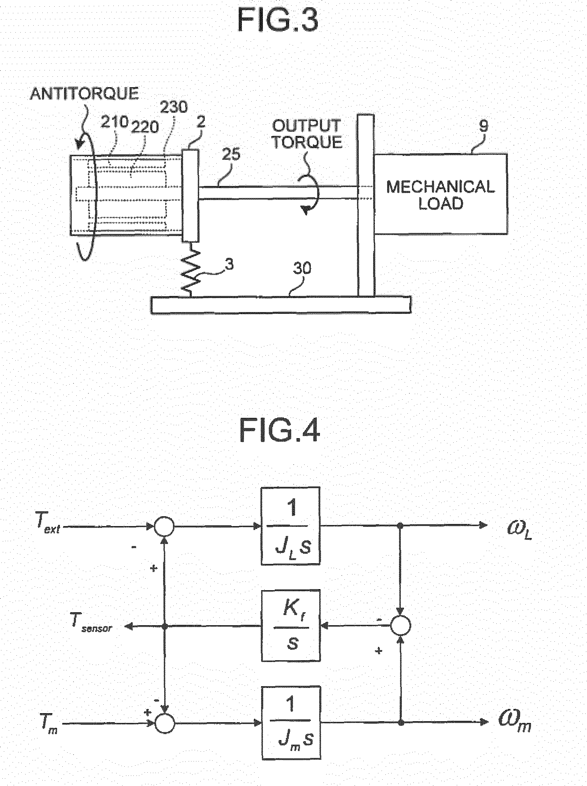

The torque sensor 3 is good enough so far as it can detect the torque of the motor 2, which may be detected in any measurement location other than the output shaft 25 of the motor 2. For example, as illustrated in FIG. 3, the torque sensor 3 may be the one that measures the anti-torque transmitted to a stator 210 of the motor 2 facing to a rotor 220 of the motor 2. FIG. 3 is a diagram illustrating an arrangement of the torque sensor 3, and the torque sensor 3 is connected between a member 30 to which the mechanical load 9 is fixed and a housing 230 of the motor 2. The anti-torque transmitted to the stator 210 is transmitted to the torque sensor 3 via the housing 230 to which the stator 210 is fixed, and the anti-torque transmitted to the stator 210 is detected by the torque sensor 3.

Also, the detected torque signal $T_{fb}$ by the torque sensor 3 may be any that uses compensation values allowing for mechanical properties of the torque sensor 3. For example, compensation may be made by approximating the torque sensor 3 to a torsion spring, and in such a manner, detection accuracy of the torque can be enhanced.

FIG. 4 is a diagram illustrating a sensor model where the inter-shaft type torque sensor 3 illustrated in FIG. 2 is approximated to a torsion spring, which can be expressed as in the following equations (1). In FIG. 4 and the equations (1), $T_m$ is a torque of the motor 2, $T_{ext}$ is a torque of the mechanical load 9, $\omega_L$ is a mechanical angular speed of the mechanical load 9, $\omega_m$ is a mechanical angular speed of the motor 2, and $T_{sensor}$ is a torque detected by the torque sensor 3. Additionally, $J_L$ is an inertia of the mechanical load 9, $J_m$ is an inertia of the motor 2, and $K_f$ is a torsional rigidity of the torque sensor 3.

$$T_{sensor} = \frac{J_L K_f}{J_m J_L s^2 + K_f(J_L + J_m)} T_m = G(s)T_m \qquad (1)$$

Thus, as represented in the following equation (2), by computing an inverse model of a transfer function of the torque sensor 3 and solving for the detected torque $T_{sensor}$ after compensation, detection accuracy of the torque can be enhanced. For example, the torque sensor 3 may have a compensating unit that calculates the equation (2) based on the detected torque $T_{sensor}$ and outputs a detected torque after compensation, $T_{sensor}'$, and the above-mentioned compensation may be made by such a compensating unit to compute the detected torque after compensation, $T_{sensor}'$, and produce it as the detected torque signal $T_{fb}$. The compensating unit may be arranged in a separate unit from the section to output the detected torque.

$$T_{sensor}' = \frac{1}{G(s)} T_{sensor} \qquad (2)$$

The motor control device 4 includes a power conversion unit 46, a current detecting unit 47, and a control unit 40. The motor control device 4 converts DC power supplied from a DC power supply 8 into three-phase AC power with desired frequency and voltage by the well-known PWM (Pulse Width Modulation) control and then outputs it to the motor 2. The motor control device 4 may have the DC power supply 8.

The power conversion unit 46 is connected between the DC power supply 8 and the motor 2 to apply to the motor 2 the voltage and current according to a PWM signal from the control unit 40. Such a power conversion unit 46 is a three-phase inverter circuit having six switching elements connected in a three-phase bridge configuration.

The DC power supply 8 may be in a configuration where the AC power is converted into the DC power and then output; for example, in a configuration where a rectifier circuit composed of diodes is combined with a smoothing capacitor. In such a case, the AC power supply is connected to the input of the rectifier circuit.

The current detecting unit 47 detects current supplied from the power conversion unit 46 to the motor 2 (referred to as 'output current' hereinafter). Specifically, the current detecting unit 47 detects instantaneous values $I_u$, $I_v$, and $I_w$ (referred to as 'output current $I_{uvw}$' hereinafter) of the current flowing between the power conversion unit 46 and U-, V-, and W-phases of the motor 2. The current detecting unit 47 is, for example, a current sensor that detects current by using a Hall effect device that is a magneto-electric conversion element.

The control unit 40 produces the PWM signal for ON/OFF control of the switching elements composing the power conversion unit 46 and outputs it to the power conversion unit 46. Such a control unit 40 has a current control unit 41, a position/speed control unit 42, and a speed/position estimating unit 43 (referred to as 'estimating unit 43' hereinafter). Based upon an estimation result from the estimating unit 43, the PWM signal output to the power conversion unit 46 is produced.

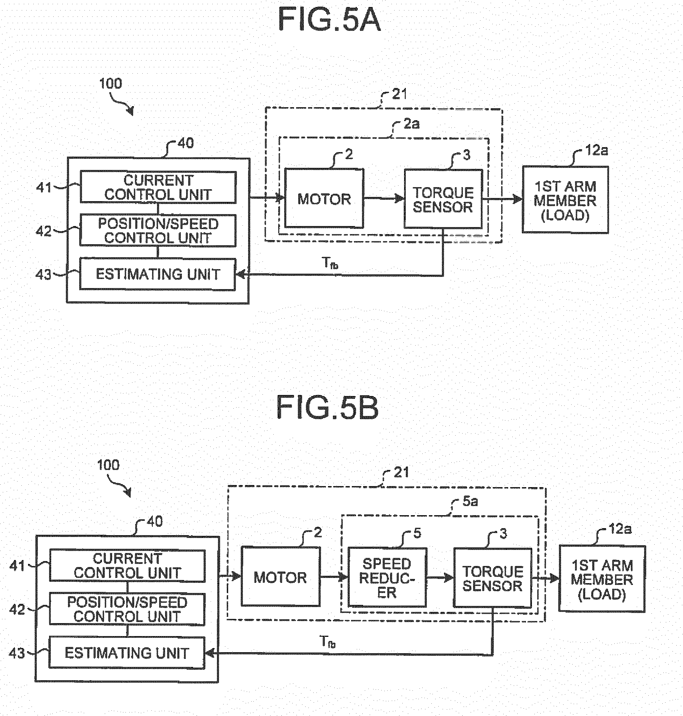

FIG. 5A is a block diagram illustrating a specific example of the motor drive system 100. For example, an application of the motor drive system 100 to the first joint 21 of the robot 1 illustrated in FIG. 1 is represented. As illustrated in FIG. 5A, the first joint 21 is provided with the motor 2 serving as a drive source to drive the first arm member 12a and the torque sensor 3 detecting the torque when the motor 2 drives it.

The torque sensor 3 is provided between the motor 2 and the first arm member 12a acting as a mechanical load 9 of the motor 2 (FIG. 2) that is an example of a movable member. In the drawing, a sensor-integrated motor 2a where the motor 2 and the torque sensor 3 are configured in a single unit is illustrated.

FIG. 5B is a block diagram illustrating another example of the motor drive system 100, and as illustrated in the drawing, the first joint 21 is provided with the motor 2 and a sensor-integrated speed reducer 5a. The sensor-integrated speed reducer 5a is of a configuration where a speed reducer 5 connected to work in cooperation with the motor 2 and the torque sensor 3 are configured in a single unit.

In this way, the first joint 21 of the robot 1 illustrated in FIG. 1 is provided with the sensor-integrated motor 2a or the motor 2 and the sensor-integrated speed reducer 5a to enable the first arm member 12a to pivot. Another sensor-integrated actuator (not illustrated) where the motor 2, the speed reducer 5, and the torque sensor 3 are configured in a single unit may be an alternative to the sensor-integrated motor 2a without the speed reducer 5 or the sensor-integrated speed reducer 5a that is a separate unit from the motor 2.

As illustrated in FIG. 2, FIG. 5A, and FIG. 5B, the motor control device 4 controlling drive of the motor 2 includes the control unit 40 composed of the current control unit 41, the position/speed control unit 42, and the estimating unit 43. The control unit 40 included by the motor control device 4 will be more specifically explained below.

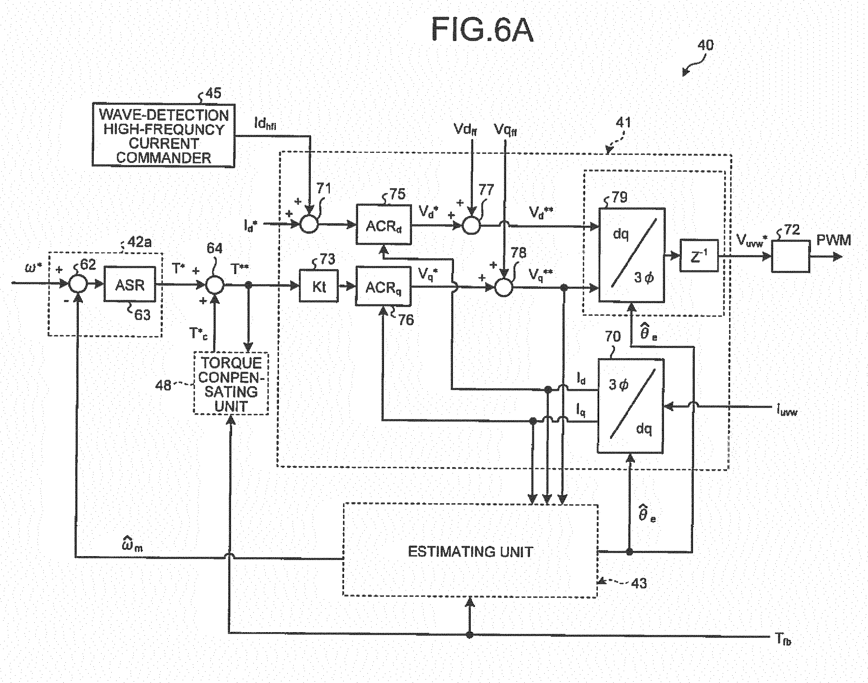

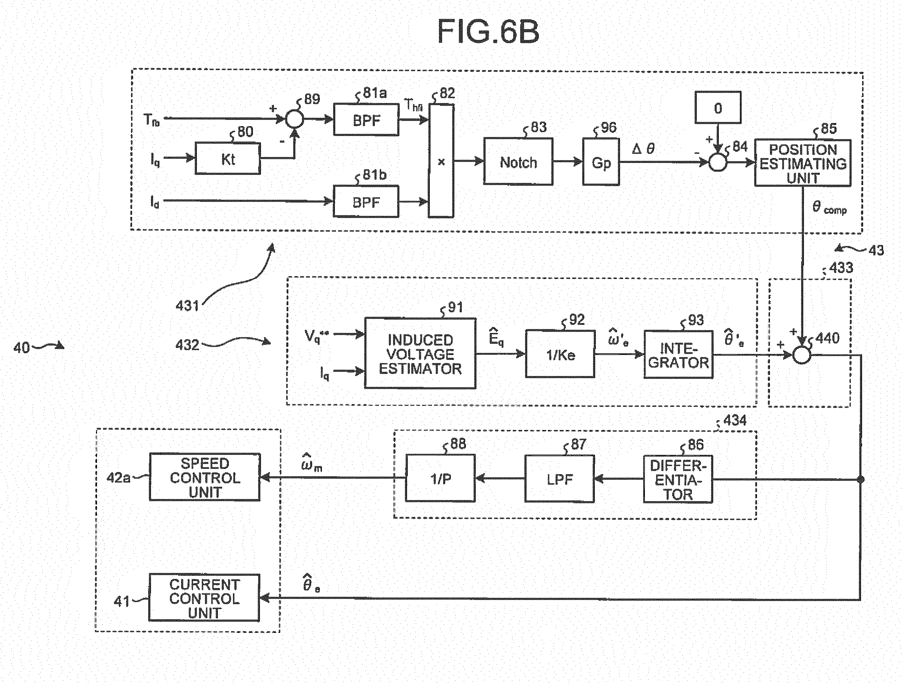

FIG. 6A is a diagram illustrating an example of the control unit 40 included in the motor control device 4 according to the embodiment, and FIG. 6B is a schematic diagram illustrating the estimating unit of the control unit 40. Examples illustrated in FIG. 6A and FIG. 6B are a case of speed control over the motor 2 where the control unit 40 includes a speed control unit 42a as the position/speed control unit 42. A case of position control over the motor 2 will be discussed later.

As illustrated in FIG. 6A, the motor control device 4 includes the estimating unit 43, the speed control unit 42a, a torque compensating unit 48, a wave-detection high-frequency current commander 45 (referred to as 'high-frequency current commander 45' hereinafter). The high-frequency current commander 45 may be provided as an external device independent of the control unit 40 and thus the motor control device 4.

Although detailed later, the estimating unit 43 estimates position and speed of the motor 2 and electrical angle $\theta_e$ of the motor 2 based upon the detected torque signal $T_{fb}$ output from the torque sensor 3. In this case, the estimating unit 43 is adapted to estimate the speed of the motor 2 and the electrical angle $\theta_e$ of the motor 2. The speed of the motor 2 estimated by the estimating unit 43 is the mechanical angular speed $\omega_m$ of the motor 2 and is output as an estimated mechanical angular speed $\omega_m{}^\wedge$.

The speed control unit 42a includes a subtractor 62 and an ASR (automated speed regulator) 63 and, based upon a speed command $\omega^*$ and the estimated mechanical angular speed $\omega_m{}^\wedge$, outputs a torque command $T^*$ to the current control unit 41. The subtractor 62 compares the speed command $\omega^*$ with the estimated mechanical angular speed $\omega_m{}^\wedge$ and outputs a deviation between the speed command $\omega^*$ and the estimated mechanical angular speed $\omega_m{}^\wedge$ to the ASR 63. The ASR 63 produces the torque command $T^*$ so that the deviation between the speed command $\omega^*$ and the estimated mechanical angular speed $\omega_m{}^\wedge$ becomes zero, and then, outputs it to an adder 64.

The adder 64 adds the torque command $T^*$ and a torque compensation command $T^*{}_c$ from the torque compensating unit 48 to produce a torque command $T^{**}$. The torque compensating unit 48 produces, from the detected torque signal $T_{fb}$ output from the torque sensor 3 and the torque command $T^*$, a torque compensation command $T^*{}_c$ to estimate a disturbance torque and then compensate for it. In other words, the torque compensating unit 48 uses the following formula (3) to calculate the torque compensation command $T^*{}_c$.

$$T_c^* = \frac{1}{T_a s + 1}\left\{ T^{**} - Tfb \right\} \tag{3}$$

Because of having such a torque compensating unit 48, the motor control device 4 and thus the motor drive system 100 including the same can suppress errors of variations in the torque due to, for example, torque disturbances such as cogging, non-linear properties of motor constants, error of phase estimation, and the like.

The high-frequency current commander 45 produces a high-frequency current command $Id_{hfi}$ and outputs it to the current control unit 41. Frequency of the high-frequency current command $Id_{hfi}$ is set to be higher than the frequency of the voltage to drive the motor 2 and the desired speed control band and set to be equal to or lower than the current control frequency.

The current control unit 41 includes a three-phase/dq coordinate converter 70, an adder 71, an amplifier 73, an ACRd 75, an ACRq 76, adders 77 and 78, and a dq/three-phase coordinate conversion unit 79.

The three-phase/dq coordinate converter 70 is an example of a current component detecting unit, which converts the output current $I_{uvw}$ detected by the current detecting unit 47 from three phases to two phases and further converts it to d- and q-axial components in the orthogonal coordinate system that rotates according to an estimated electrical

angle $\theta_e$^. This results in the output current $I_{uvw}$ being converted to a q-axial current Iq identified as a q-axial component in the dq-axis rotating coordinate system and a d-axial current Id identified as a d-axial component in the same. The q-axial current Iq corresponds to a torque current flowing in the motor 2 while the d-axial current Id corresponds to an exciting current flowing in the motor 2.

The adder 71 outputs to the ACRd 75 a d-axial current command Id** that is produced by adding the high-frequency current command $Id_{hfi}$ to the d-axial current command Id*. The d-axial current command Id* is set, for example, to zero when the motor 2 is driven in a constant torque range, and is set to a value according to the mechanical angular speed $\omega_m$ of the motor 2 when the motor 2 is driven in a constant power range.

The ACRd 75 produces a d-axial voltage command Vd*, for example, by conducting PI- (proportional integral) control so that a deviation $Id_{err}$ between the d-axial current command Id** and the d-axial current Id becomes zero, and then outputs it to the adder 77.

The amplifier 73 multiplies the torque command T** by Kt and outputs to the ACRq 76 a signal corresponding to the q-axial current command Iq*. The ACRq 76 produces a q-axial voltage command Vq*, for example, by conducting the PI (proportional integral) control so that a deviation between the signal obtained by multiplying the torque command T** by Kt and the q-axial current Iq becomes zero, and then outputs it to the adder 78.

The adder 77 produces a d-axial voltage command Vd** by adding a d-axial compensation voltage $Vd_{ff}$ to the d-axial voltage command Vd* while the adder 78 produces a q-axial voltage command Vq** by adding a q-axial compensation voltage $Vq_{ff}$ to the q-axial voltage command Vq*. The d-axial compensation voltage $Vd_{ff}$ and the q-axial compensation voltage $Vq_{ff}$ are for the sake of compensation for interference between the d- and q-axes and for induced voltage, and they are computed, for example, by using the d-axial current Id, the q-axial current Iq, motor parameters, and the like.

The dq/three-phase coordinate conversion unit 79 converts the d-axial voltage command Vd** and the q-axial voltage command Vq** to a three-phase voltage command $V_{UVW}$* through a coordinate conversion based upon the estimated electrical angle $\theta_e$^. The three-phase voltage command $V_{UVW}$* is input to a PWM signal generation unit 72, and the PWM signal generation unit 72 produces a PWM signal according to the three-phase voltage command $V_{UVW}$* and outputs it to the power conversion unit 46.

A configuration of the estimating unit 43 will be described more specifically. FIG. 6B is a diagram illustrating the estimating unit 43. In passing, the speed of the motor 2 estimated by the estimating unit 43 is the mechanical angular speed $\omega_m$ of the motor 2, and the estimating unit 43 outputs information of the mechanical angular speed $\omega_m$ of the motor 2 as an estimated mechanical angular speed $\omega_m$^. The information of the electrical angle $\theta_e$ of the motor 2 estimated by the estimating unit 43 is output as the estimated electrical angle $\theta_e$^.

As illustrated in FIG. 6B, the estimating unit 43 includes a first estimating unit 431, a second estimating unit 432, a summing unit 433, and a speed calculating unit 434.

The first estimating unit 431 includes an amplifier 80, subtractors 84 and 89, BPFs (bandpass filters) 81a and 81b, a multiplier 82, a Notch (notch filter) 83, and a phase estimating unit 85. Then, it estimates at least one of the speed and position of the motor 2 based upon the detected torque signal $T_{fb}$ resulting from detection by the torque sensor 3 and the high-frequency current component superimposed onto the output current to the motor 2. The high-frequency current component superimposed onto the output current to the motor 2 is a high-frequency component $T_{hfi}$ of the torque when the high-frequency current command $Id_{hfi}$ from the high-frequency current commander 45 (FIG. 6A) is superimposed onto the d-axis. Also, the output current to the motor 2 is a current identified as the d-axial component (the d-axial current) in the dq-axis rotating coordinate system in synchronization with rotations of the rotor (not illustrated) of the motor 2.

In the amplifier 80, the q-axial current Iq is multiplied by the torque constant Kt and thus converted to torque, which is output to the subtractor 89. The subtractor 89 compares the current-to-torque converted value from the amplifier 80 with the detected torque signal $T_{fb}$ that is a feedback signal of the torque, and outputs a deviation between them to a BPF 81a.

The BPF 81a is an example of an oscillation component extracting unit and extracts the high-frequency component $T_{hfi}$ in the torque when the high-frequency current command $Id_{hfi}$ is superimposed onto the d-axis. Thus, based upon the detected torque signal $T_{fb}$ and the q-axis current Iq, an oscillation component of the torque developed by phase shift can be extracted. In the BPF 81a, filter properties are set so that the frequency of the high-frequency current command $Id_{hfi}$ is within a passband of the BPF 81a. Also, the BPF 81b receives input of the d-axial current Id corresponding to the exciting current flowing in the motor 2.

Subsequently, the multiplier 82 multiplies a high-frequency component $T_{hfi}$ of the torque output from the BPF 81a by the d-axial current Id passed through the BPF 81b. Then, the Notch (notch filter) 83 eliminates an oscillation component of doubled angular frequency $\omega_{hfi}$ resulting from the multiplication and inputs the result to a filter unit 96 to obtain a phase error $\Delta\theta$. Although the Notch 83 is used in this example, the Notch 83 may be replaced with a low-pass filter.

The subtractor 84 compares the phase error $\Delta\theta$ output from the Notch 83 with zero to obtain a deviation of the phase error $\Delta\theta$ from zero. The phase estimating unit 85 is composed of a PLL circuit and derives a phase compensation amount $\theta_{comp}$ by which the deviation of the phase error $\Delta\theta$ from zero becomes zero.

Now, an example of an estimation operation by the first estimating unit 431 configured as illustrated in FIG. 5B will be described below. The following is on the assumption that an SPM motor with non-salient feature of magnetic poles is used as the motor 2.

In general, the motor torque T is computed by the equation (4) with the q-axial current Iq and the torque constant Kt.

$$T = I_q K_t \tag{4}$$

On the assumption that the phase error $\Delta\theta$ exists between a control axes and a real axes, the motor torque T is expressed as in the following equation (5).

$$T = I_d K_t \sin(\Delta\theta) + I_q K_t \cos(\Delta\theta) \tag{5}$$

The torque error due to the phase error $\Delta\theta$ is detected by the torque sensor 3, and the estimation operation to correct the control axes is carried out. The detected torque signal $T_{fb}$ of the torque developed when the high-frequency current with the angular frequency $\omega_{hif}$ is superimposed onto the d-axial current command $Id_{max}$ is expressed in the following equation (6).

$$\begin{cases} I_d = I_{d\,max} \sin(\omega_{hfi}t) \\ T_{fb} = K_t I_{d\,max} \sin(\omega_{hfi}t) \sin(\Delta\theta) + K_t I_q \cos(\Delta\theta) \end{cases} \tag{6}$$

In order to solve the equation (6) for the phase error $\Delta\theta$, quantity of the q-axial command is to be subtracted from the developed torque (i.e., the detected torque signal $T_{fb}$). To that end, the high-frequency component $T_{hfi}$ of the torque is extracted by an arithmetic operation as in the following equations (7).

$$T_{hfi} = T_{fb} - K_t I_q \cos(\Delta\theta) = K_t I_{d\,max} \sin(\omega_{hfi}t) \sin(\Delta\theta) \tag{7}$$

Further, the high-frequency component Thfi identifies as the oscillation component of the torque is multiplied by the d-axial current Id as expressed in the following equation (8), and then, the oscillation component of the doubled angular frequency ($2\omega_{hif}$) resulting from the multiplication is eliminated by the Notch (notch filter) 83 based on the following equation (9).

$$T_{hfi}I_d = \left\{\frac{1 - \cos(2\omega_{hfi}t)}{2}\right\} I_{d\,max}^2 Kt \sin(\Delta\theta) \tag{8}$$

$$notch(T_{hif}I_d) = \frac{1}{2} I_{d\,max}^2 Kt \sin(\Delta\theta) \tag{9}$$

Because the phase error $\Delta\theta$ is obtained from the following equation (10), the following infinitesimal approximation (11) to the equation (10) is used to obtain the phase error $\Delta\theta$.

$$\sin(\Delta\theta) = notch(T_{hif}I_d) \times \frac{2}{I_{d\,max}^2 Kt} \tag{10}$$

$$\Delta\theta = notch(T_{hif}I_d) \times \frac{2}{I_{d\,max}^2 Kt} \tag{11}$$

Eventually, in order to correctly extract only high-frequency superimposed signal components, the phase error

$\Delta\theta$ is computed, for example, on the following equations (12) that is a modification of the equation (11) counting on use of a bandpass filter where Gp is an operation coefficient that cancels a coefficient derived from the multiplier 82 and the Notch (notch filter) 83.

$$\Delta\theta = notch\{bpf(T_{vib}) \times bpf(I_d)\} \times \frac{2}{I_{d\,max}^2 Kt} = notch\{bpf(T_{vib}) \times bpf(I_d)\} Gp$$

$$(12)$$

In obtaining the phase error $\Delta\theta$ from the equation equations (12), it is desirable completely eliminating the frequency component of the doubled angular frequency $\omega_{hfi}$ by using the Notch 83. Because the frequency attenuation ratio and the frequency response in the Notch 83 are related as one is a trade-off for the other, an attempt to enhance frequency responsivity leads to an increase in the residual oscillation. An oscillation component of the residual oscillation is a factor that reduces the accuracy of estimating the position and speed of the motor.

Thus, the motor control device 4 according to the embodiment utilizes an estimating function of the first estimating unit 431 together with that of the second estimating unit 432 mentioned later to lessen the oscillation component and ensure the frequency responsivity.

In order to suppress the error calculated on the equation (11), a PLL (phase locked loop) to make an amount of the error zero is incorporated in the phase estimating unit 85 to solve the following equations (13) and obtain the phase compensation amount $\theta_{comp}$.

$$\begin{cases} \theta_{comp} = PI(\theta^* - \Delta\theta) \\ \theta^* = 0 \end{cases} \qquad (13)$$

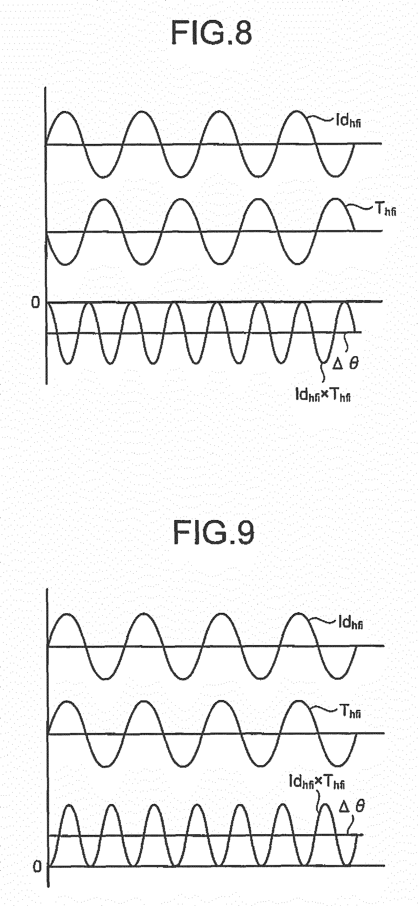

Discussed now will be the phase error $\Delta\theta$ derived by the above-mentioned first estimating unit 431 based on the detected torque signal $T_{fb}$ resulting from detection by the torque sensor 3 and the high-frequency current components (high-frequency component $T_{hfi}$) superimposed onto the output current to the motor 2. FIG. 8 and FIG. 9 are diagrams illustrating relations among the high-frequency current command $Id_{hfi}$, the high-frequency component $T_{hfi}$ of the torque, and the phase error $\Delta\theta$.

As illustrated in FIG. 8, for example, when the estimated electrical angle $\theta_e{}^\wedge$ is delayed by 90 degrees, the high-frequency current command $Id_{hfi}$ and the high-frequency component $T_{hfi}$ of the torque are reversed in phase, and the phase error $\Delta\theta$ takes a negative value. Otherwise, when the estimated electrical angle $\theta_e{}^\wedge$ is 90-degree ahead, as illustrated in FIG. 9, the high-frequency current command $Id_{hfi}$ and the high-frequency component $T_{hfi}$ of the torque are in phase, and the phase error $\Delta\theta$ takes a positive value.

On the other hand, when the estimated electrical angle $\theta_e{}^\wedge$ has no error, the high-frequency component $T_{hfi}$ of the torque becomes zero, which means the phase error $\theta_e{}^\wedge$ of zero. Thus, as illustrated in FIG. 6B, the subtractor 84 compares the phase error $\Delta\theta$ output from the Notch 83 with zero to obtain a deviation of the phase error $\Delta\theta$ from zero. Thus, the phase estimating unit 85 obtains the phase compensation amount $\theta_{comp}$ so that the deviation between the phase error $\Delta\theta$ and zero becomes zero and outputs the result. The phase estimating unit 85 functions as an PLL, and the configuration of the PLL may be, without limitation to PI-control, any of appropriate combinations of controls such as P- (proportional), D- (differential), I- (integral), and I2- (double integral) controls, and the like.

The second estimating unit 432 includes an induced voltage estimator 91, a speed calculator 92, and an integrator 93. The induced voltage estimator 91 may be of any well-known configuration and produces an estimated induced voltage $E_q{}^\wedge$ from the q-axial voltage command Vq** output from the adder 78 of the current control unit 41 and the d-axial current Id output from the three-phase/dq coordinate converter 70 of the current control unit 41. The induced voltage estimator 91 may be in an observer configuration.

Thus, the speed calculator 92 multiplies the estimated induced voltage $E_q{}^\wedge$ by 1/Ke (an induced voltage constant) to produce an estimated speed $\omega_e'{}^\wedge$. The integrator 93 integrates the estimated speed $\omega_e'{}^\wedge$ input thereto and outputs an estimated phase $\theta_e'{}^\wedge$.

The estimated speed $\omega_e'{}^\wedge$ and the estimated phase $\theta_e'{}^\wedge$ estimated by the second estimating unit 432 are produced without using high-frequency oscillation unlike the first estimating unit 431, and therefore, lead to the estimation results that are smoothed but have errors. In other words, by using the second estimating unit 432, a rate of the smoothed estimation component independent of the high-frequency component can be increased.

An example of the estimation operation by the second estimating unit 432 configured as illustrated in FIG. 6B will be described as follows.

A voltage current formula of the motor 2 is expressed by the following equation (14). Vd and Vq in the equation denote d- and q-axil components of the voltage applied to the motor 2, and Id and Iq are d- and q-axial components of the current flowing in the motor 2. R is a winding resistance of the motor 2, Ld and Lq are d- and q-axial inductance values, Ke is an induced voltage constant, and P is a differential operator.

$$\begin{bmatrix} V_d \\ V_q \end{bmatrix} = \begin{bmatrix} R + pL_d & -\omega L_q \\ \omega L_d & R + pL_q \end{bmatrix} \begin{bmatrix} I_d \\ I_q \end{bmatrix} + \begin{bmatrix} 0 \\ \omega_e Ke \end{bmatrix} \tag{14}$$

In order to estimate a motor speed $\omega_e$, it may first be estimated that the induced voltage $E_q = \omega_e Ke$. Then, a low-pass filter of the time constant T is used to compose a voltage disturbance observer. The following equation (15) is a formula expressing the voltage disturbance observer. The estimated speed $\omega_e$'^ and the estimated phase $\theta_e$'^ are expressed in the following equations (16).

$$\hat{E}_q = \hat{\omega}_e Ke = \frac{1}{Ts + 1} \left\{ V_q - \left( R + pL_q \right) I_q \right\} \tag{15}$$

$$\begin{cases} \hat{\omega}'_e = \frac{1}{Ke} \hat{E} \\ \hat{\theta}'_e = \frac{1}{s} \hat{\omega} \end{cases} \tag{16}$$

The summing unit 433 essentially consists of an adder 440. In this embodiment, the phase compensation amount $\theta_{comp}$ that is an estimation result from the first estimating unit 431 and the estimated phase $\theta_e$'^ that is an estimation result from the second estimating unit 432 are summed up by the summing unit 433 (the adder 440) to obtain the estimated electric current $\theta_e$^ identified as an eventual estimated value.

The speed calculating unit 434 includes a differentiator 86, an LPF (low-pass filter) 87, and a mechanical angle calculating unit 88.

The differentiator 86 can calculate the estimated electrical angular speed by differentiating the estimated electrical angle $\theta_e$^. The LPF 87 eliminates noise from the estimated electrical angular speed and outputs the result to the mechanical angle calculating unit 88. The mechanical angle calculating unit 88 obtains the estimated mechanical angular speed $\omega_m$^ by dividing the estimated electrical angular speed by the number of poles P of the motor 2.

Operations by the summing unit 433 and the differentiator 86 are conducted based upon the following equations (17).

$$\begin{cases} \hat{\theta}_e = \hat{\theta}'_e + \theta_{comp} \\ \hat{\omega}_m = \frac{1}{P} \frac{s}{T_c s + 1} \hat{\theta}_e \end{cases} \tag{17}$$

As has been described so far, in the estimating unit 43, the estimated error is calculated by the first estimating unit 431. Specifically, based upon the current superimposed with the high-frequency current components and fed back and the detected torque, namely, the q-axial current Iq and the detected torque signal $T_{fb}$ resulting from detection by the torque sensor 3, the estimated error is calculated.

Also, in the second estimating unit 432, estimated values of the induced voltage by the motor 2 (the estimated induced voltage $E_q$^, the estimated speed $\omega_e$'^, and the estimated phase $\theta_e$'^) are calculated from the voltage command (the q-axial voltage command Vq**) and the feedback current (the d-axial current Id).

Then, based upon the estimation results from the first and second estimating units 431 and 432, the estimated mechanical angular speed $\omega_m$^ identified as the estimated value of the speed of the motor 2 is obtained.

In this manner, the motor control device 4 according to the embodiment controls the motor 2 without using a position detector such as an encoder that is expensive and flawed in terms of its environmental resistance against oscillation and impact, but by using the torque sensor 3 superb in environmental resistance. Thus, the motor drive system 100 and the motor control device 4 that is of a reduced cost yet is expected to enhance operation performance can be implemented.

The configurations illustrated in FIG. 6A and FIG. 6B are suitable to the cases where the control unit 40 in the motor control device 4 conducts speed control over the motor 2. Discussed below will be a case that the control unit 40 conducts position control over the motor 2.

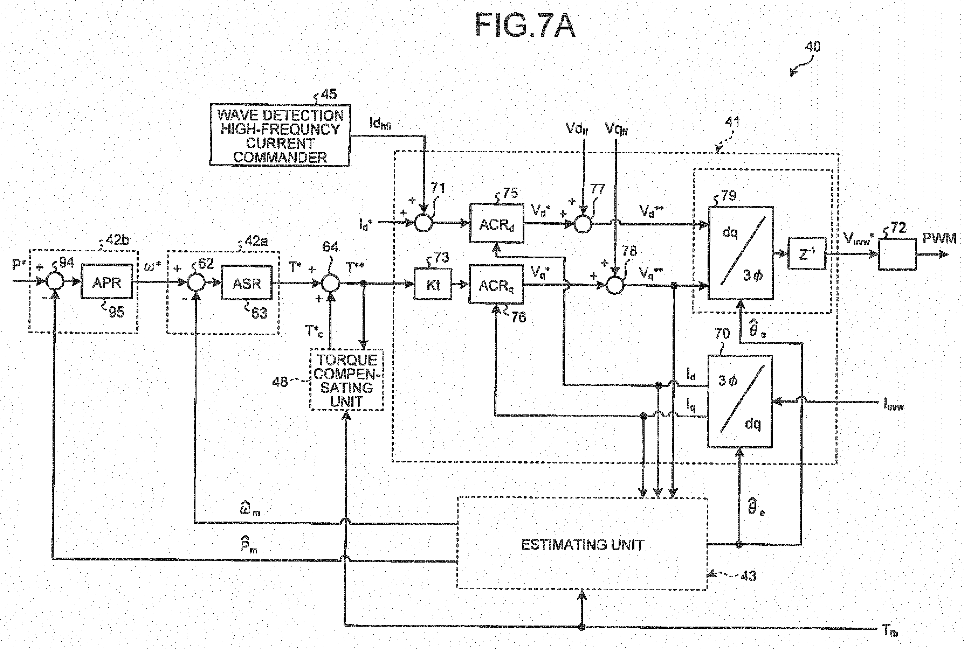

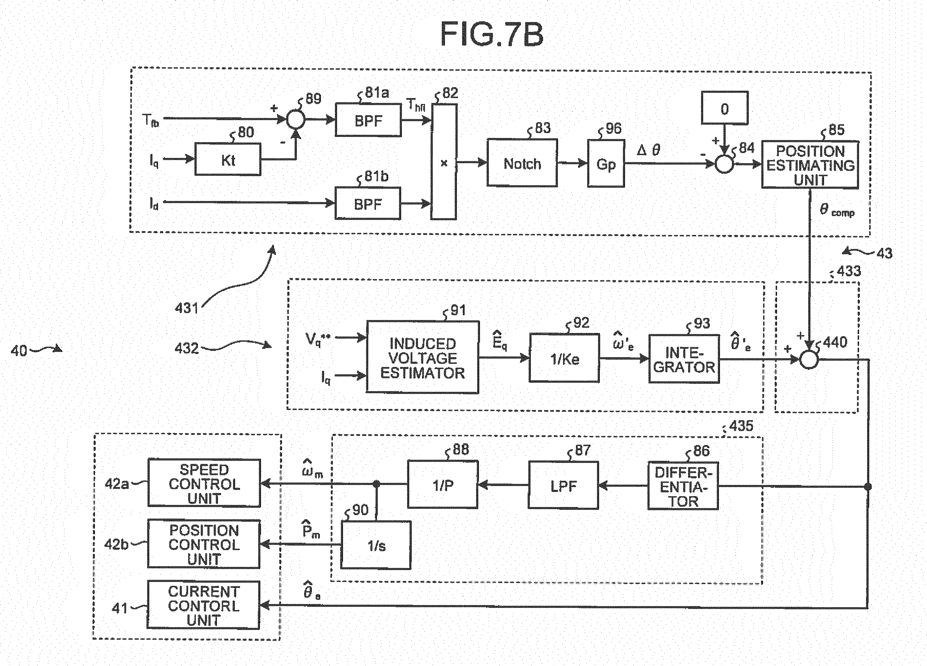

FIG. 7A is a diagram illustrating another configuration example of the motor control device 4, and FIG. 7B is a diagram illustrating an estimating unit 43 in the motor control device 4 of such an arrangement example. The configuration example is different from the configuration example previously mentioned simply in that a position control unit 42b is added and that the speed calculating unit 434 is replaced with a speed/position calculating unit 435. Thus, only the position control unit 42b and the speed/position calculating unit 435 will be described below, and other elements similar to those illustrated in FIG. 6A and FIG. 6B are denoted by the same reference numerals while the description of them is omitted.

As illustrated in FIG. 7A, this configuration example includes the position control unit 42b, and the position control unit 42b includes a subtractor 94 and an APR (automated position regulator) 95. The subtractor 94 compares a position command P* with an estimated mechanical angle $P_m$^ from the estimating unit 43 to obtain a deviation. The APR 95 outputs a speed command $\omega$* to the ASR (automated speed regulator) 63 of the speed control unit 42a.

Also, as illustrated in FIG. 7B, the speed/position calculating unit 435 includes an integrator 90. The integrator 90 integrates the estimate mechanical angular speed $\omega_m$^ from the mechanical angle calculating unit 88 and outputs to the position control unit 42b the estimated mechanical angle $P_m$^ that indicates a position of the motor 2. The integrator 90 may be provided external to the speed/position calculating unit 435 or external to the estimating unit 43.

Meanwhile, as previously mentioned, the second estimating unit 432 included by the control unit 40 is enabled by the induced voltage estimator 91 to obtain the estimated induced voltage $E_q$^, the estimated speed $\omega_e$'^, and the estimated phase $\theta_e$'^.

On the other hand, the induced voltage estimator 91 can complete its performance by raising the high-frequency current command $Id_{hfi}$ when the motor 2 is slow (the induced voltage is low). In other words, the high-frequency current command $Id_{hfi}$, when it is small, is influenced more by the detection sensitivity of the current detecting unit 47 and the detected noise. Thus, by raising the high-frequency current command $Id_{hfi}$, the gain of the PLL in the phase estimating unit 85 to estimate the position and speed of the motor 2 can be raised, and the estimation accuracy can be enhanced.

Also, the induced voltage estimator 91 encounters a difficulty in estimating the induced voltage, for example, when the motor 2 operates at the speed equal to or less than 10 % of its full performance. Then, when the speed of the motor 2 exceeds a predetermined value, the estimating unit 43 may derive an estimated value of at least one of the speed and position of the motor 2 based upon the estimated results by the first and second estimating units 431 and 432. Thus, when the speed of the motor 2 is less than the predetermined value, the estimating unit 43 derives the estimated value of at least one of the speed and position of the motor 2 based upon the estimated result by the first estimating unit 431.

To that end, for example, it may be configured so that the estimated speed $\omega_e$'^ or other values derived from the induced voltage is used to obtain variations in the speed of the motor 2, and when the speed of the motor 2 exceeds the predetermined value, the estimation result from the second estimating unit 432 is input to the summing unit 433. Alternatively, a switch or the like may be provided to enable switching so that the estimated result by the second estimating unit 432 can be input to the summing unit 433 when the speed of the motor 2 exceeds the predetermined value.

(Other Embodiments)

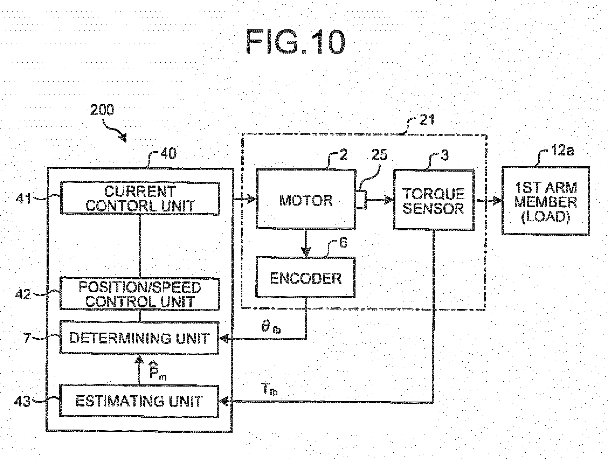

Other embodiments of the motor drive system will now be described. FIG. 10 is a diagram illustrating a motor drive system 200 according to another embodiment. In the following, also, discussed will be a case that the motor drive system 200 is applied to the first joint 21 of the robot 1 illustrated in FIG. 1.

As illustrated in the drawing, the motor drive system 200 is provided with an encoder 6 serving as a position detector that detects the position of the motor 2, in addition to the torque sensor 3. The motor control device 4 includes within the control unit 40 a determining unit 7 that determines whether the encoder 6 is in normal drive or not.

The determining unit 7 observes operation of the encoder 6 while receiving a detected position signal $\theta_{fb}$ from the encoder 6 and the estimated mechanical angle $P_m$^ from the estimating unit 43. Then, the determining unit 7 determines that the encoder 6 is in unusual drive when a difference between the detected position signal $\theta_{fb}$ and the estimated mechanical angle $P_m$^ is greater than the predetermined value.

When there is no unusualness in the operation of the encoder 6, the control unit 40 controls the motor 2 by using the detected position signal $\theta_{fb}$ from the encoder 6 as a position feedback signal. On the other hand, the detected torque signal $T_{fb}$ from the torque sensor 3 may be used as a torque compensation signal. Meanwhile, when the determining unit 7 determines that there is unusualness in the encoder 6, the control unit 40 controls the motor 2 by using the estimated angular speed $P_m$^ and the estimated angular speed $\omega_m$^ estimated by the estimating unit 43.

Configured in this manner, the motor drive system 200 can attain a fail-safe feature at reduced costs, thereby enabling the motor control based upon the torque sensor 3 even when malfunction arises in the encoder 6 used for the motor control.

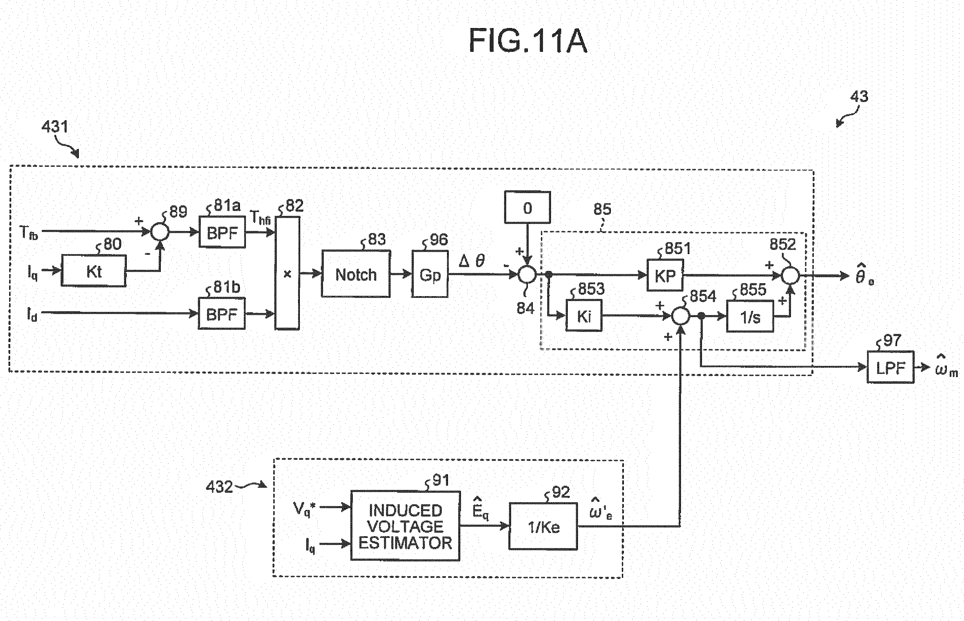

Referring to FIG. 11A to FIG. 11C, other examples of the estimating unit 43 in the control unit 40 will be described. FIG. 11A to FIG. 11C are diagrams illustrating estimating units in control units according to another embodiment.

The estimating unit 43 in the embodiment has the configuration that the estimated result by the second estimating unit 432 can be added by the operation on the PLL circuit of the phase estimating unit 85 included in the first estimating unit 43.

As illustrated in FIG. 11A, in the estimating unit 43 according to the second embodiment, the phase estimating unit 85 of the first estimating unit 431 includes a P-controller 851, adders 852 and 854, an I-controller 853, and an integrator 855 and conducts PI-control. Meanwhile, the second estimating unit 432 is what is the second estimating unit 432 according to the previously mentioned embodiment from which the integrator 93 is omitted (see FIG. 6B and FIG. 7B). An estimated speed $\omega_e'^\wedge$ output from the speed calculator 92 is input to the adder 854 of the phase estimating unit 85.

The adder 854 is equivalent to a summing unit that sums up estimated results by the first and second estimating units 431 and 432. Specifically, the adder 854 adds the estimated speed $\omega_e'^\wedge$ output from the speed calculator 92 to a result of a calculation by which an error deviation (a deviation between the phase error $\Delta\theta$ obtained by the subtractor 84 and zero) is converted to speed by the I-controller 853. Then, the adder 854 produces an estimated speed signal substantially equivalent to the motor speed $\omega_e$ and outputs it to a low-pass filter 97 and the integrator 855. In the drawings, Ki denotes an integral gain.

The low-pass filter 97 eliminates noise from the estimated speed signal and forwards the result to the mechanical angle calculating unit 88 not illustrated (see FIG. 6B and FIG. 7B), and an estimated mechanical angular speed $\omega_m^\wedge$ is obtained.

The integrator 855 derives an estimated phase $\theta_e'^\wedge$ by integrating the estimated speed signal input thereto and then outputs it to the adder 852.

The adder 852 adds the estimated phase $\theta_e'^\wedge$ and the error deviation processed in the P-controller 851 to obtain an estimated electrical angle $\theta_e'^\wedge$. Kp denotes a proportional gain.

In the aforementioned configuration, the speed estimated by the induced voltage estimator 91 of the second estimating unit 432 may be incorporated by adding into a stage subsequent to the adder 854 and/or may use the estimated speed signal produced by the adder 854 as a speed feedback value. In such a case, the proportional gain Kp component is negligible as being relatively small.

In this manner, adding the estimated result by the second estimating unit 432 to an operation on a PLL circuit of the phase estimating unit 85 in the first estimating unit 431 can lead to reduction of a load on an operation process and cut-off of noise of the P-controller 851. As to the I-controller 853, because the high-frequency component can be leveled off, a noise reduction effect can be produced.

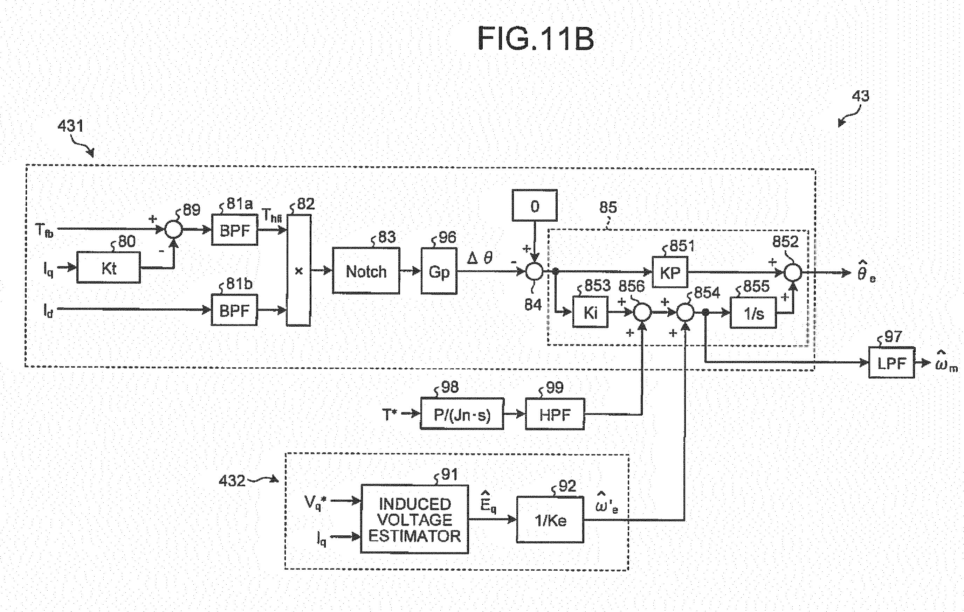

The configuration of adding the estimated result by the second estimating unit 432 to the operation on the PLL circuit of the phase estimating unit 85 in the first estimating unit 431 may be the one that has the estimating unit 43 illustrated in FIG. 11B. Specifically, as illustrated in the drawing, the phase estimating unit 85 of the estimating unit 43 according to a third embodiment has a second adder 856 between the I-controller 853 and the adder 854.

Then, the second adder 856 is provided with a calculator 98 and a high-pass filter 99 as a configuration of obtaining information of the estimated current angular speed from the torque command T*. Because other parts of the configuration are similar to those of the estimating unit 43 according to the second embodiment, the description of them is omitted.

Specifically, the phase estimating unit 85 in the third embodiment causes the second adder 856 to add information of the estimated current angular speed as torque information to the converted speed from the I-controller 853 and causes the adder 854 to receive the result input thereto. The information of the estimated current angular speed as the torque information is obtained by making the calculator 98 perform a predetermined operation on the torque command T* and filtering the result in the high-pass filter 99. In the drawing, P is a motor output, and J is an inertia (moment of inertia).

With such a configuration, it is possible to cope with rapid changes in the torque command T* and enhance responsiveness. Also, the high-pass filter 99 may be omitted. In addition, the torque command T* may be replaced with a detected torque signal $T_{fb}$.

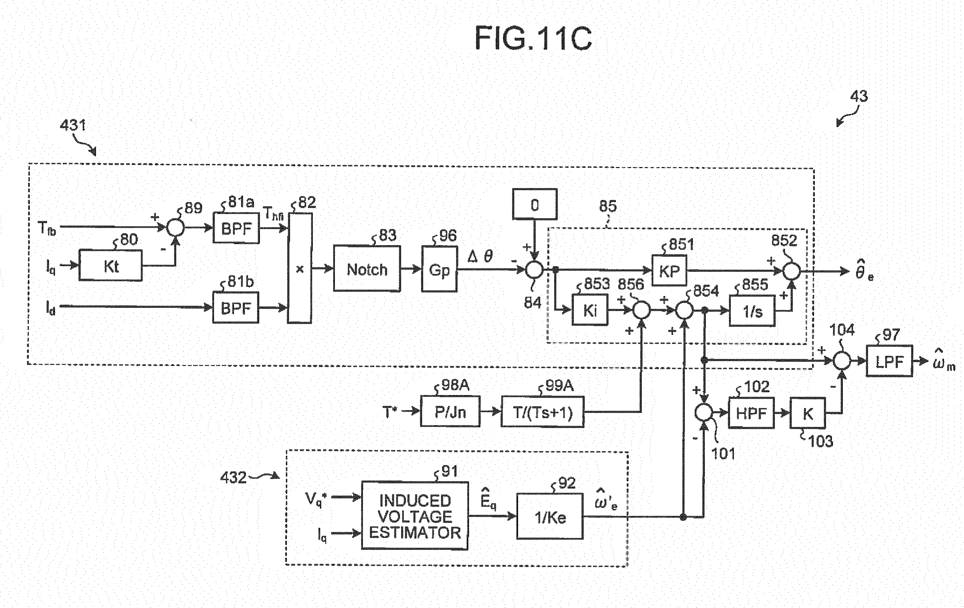

Moreover, the configuration of adding the estimated result by the second estimating unit 432 to the operation on the PLL circuit of the phase estimating unit 85 in the first estimating unit 431 may be the one illustrated in FIG. 11C. As illustrated in FIG. 11C, the estimating unit 43 according to a fourth embodiment has a configuration where a first subtractor 101, a high-pass filter 102, a calculating unit 103, and a second subtractor 104 are further added to the estimating unit 43 according to the third embodiment. Also, the second adder 856 includes, as a configuration to obtain the information of the estimated current angular speed from the torque command T* and instead of a calculator 98A and the high-pass filter 99, an integrator 99A where the time constant is set. Similar to the third embodiment, it may be composed of the calculator 98 and the high-pass filter 99. Because other parts of the configuration are similar to those of the estimating unit 43 according to the second embodiment, the description of them is omitted.

The first subtractor 101 compares an estimated speed signal substantially equivalent to the motor speed $\omega_e$ output from the adder 854 with an estimated speed $\omega_e$'^ output from the speed calculator 92 and obtains a difference between the estimated speeds. High-frequency oscillation appearing as the difference is equivalent to the estimated noise, which is extracted by the high-pass filter 102. Then, after it is multiplied by K (the gain) in the calculating unit 103, the estimated noise is subtracted from the original estimated speed signal by the second subtractor 104 and output to the low-pass filter 97. The gain K is an adjusted value, and when K=1, an oscillation component is totally cut off.

With such a configuration, the estimated speed $\omega_e$'^, which is more approximate to the correct motor speed $\omega_e$ and compensated for the estimated noise by eliminating it, can be obtained. Hence, the motor speed $\omega_e$ can be smoothed more.

In this manner, the estimated result by the second estimating unit 432 is used to compensate for the oscillation component, and the motor speed $\omega_e$ can be smoothed more.

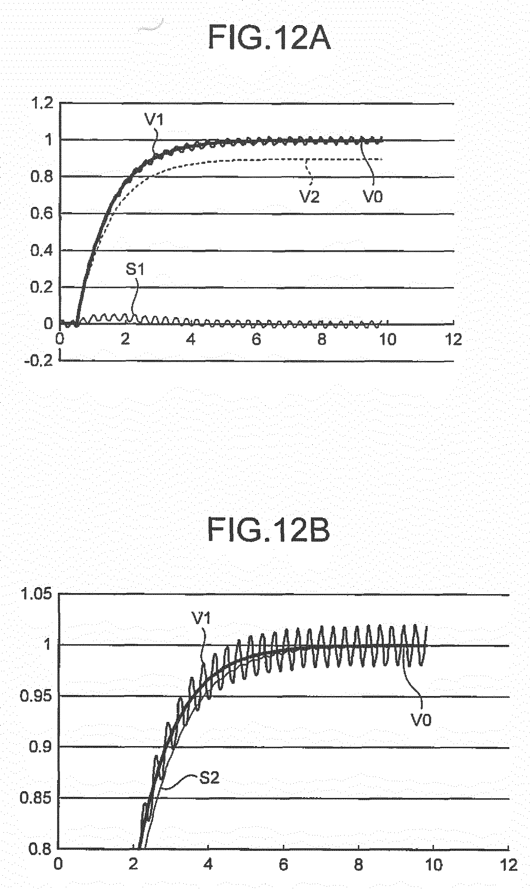

Referring to FIG. 12A and FIG. 12B, a process by the first subtractor 101, a process by the high-pass filter 102, and a process by the second subtractor 104 will now be described. FIG. 12A is a diagram illustrating a relation between the speed estimated from the high-frequency torque and the speed estimated from the induced voltage, and FIG. 12B is a diagram illustrating a relation between an estimated speed after compensation and the speed estimated from the high-frequency torque.

In FIG. 12A, V0 is the correct motor speed $\omega_e$, V1 is the motor speed estimated from the high-frequency torque, V2 is the speed estimated from the induced voltage, namely, the estimated speed $\omega_e$'^ output from the speed calculator 92. A signal S1 extracted by using the high-pass filter 102 after calculating a difference between V1 and V2 by the first subtractor 101 is equivalent to a signal of the high-frequency oscillation appearing as the difference (estimated noise).

Also, in FIG. 12B, S2 is a curve illustrating the estimated speed $\omega_e$'^ after compensation that has had the estimated noise eliminated by the second subtractor 104 and the oscillation reduced, and is recognized as being approximate to a curve of V0 illustrating the correct motor speed $\omega_e$.

As has been described so far, the motor drive systems 100 and 200 according to the aforementioned embodiments can control the motor 2 by using not a position sensor such as an encoder that is flawed in terms of its environmental resistance against oscillation and impact but the torque sensor 3 that is relatively robust. Thus, it is possible to enhance the environmental resistance and significantly reduce torque ripple and the like. Also, the motor drive systems 100 and 200 do not have to use an expensive position sensor and the like, and a cost decrease of the motor drive systems is expected.

The motor drive systems 100 and 200 according to the embodiment are applicable to the motor 2 regardless of its type or of whether an interior permanent magnet motor or a surface permanent magnet motor. In this respect, for example, a high power density SPMM (Surface Permanent Magnet Motor) that has permanent magnets bonded over the surface of the rotor may be used, which is a contribution to a size reduction of the motor 2.

The estimating unit 43 included in the motor control device 4 together utilizes the first estimating unit 431 that uses the high-frequency component $T_{hfi}$ superimposed on the output current to the motor 2 and the detected torque signal $T_{fb}$, and additionally the second estimating unit 432 that is not affected by the high-frequency component $T_{hfi}$. Thus, because an estimated motor position can be obtained with high accuracy, highly reliable, sensorless position control can be attained.

Although the embodiments have been described by giving examples where the motor drive systems 100 and 200 are applied to the robot 1, they can be applied to anything that is driven by the motor 2. In addition, a specific configuration of the torque sensor 3 may be appropriately modified.

Further, although the embodiments have been described by giving the example where the motor 2 is a rotary motor such as a permanent magnet synchronous electric motor, the motor 2 is not limited to the rotary motor and may be a linear motor. In such a case, the torque sensor 3 is replaced with an acceleration sensor.

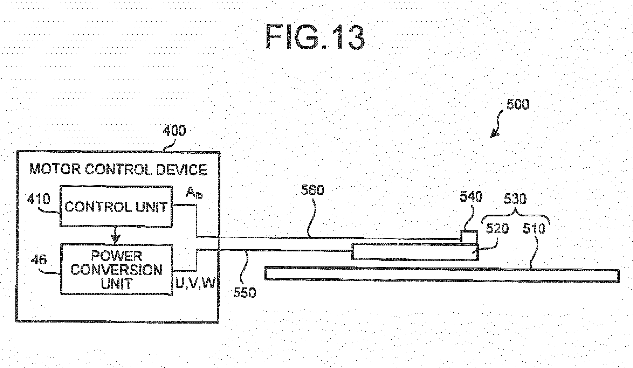

FIG. 13 is a diagram illustrating a configuration of the motor drive system with a linear motor. A motor drive system 500 illustrated in FIG. 13 includes a motor control device 400, a linear motor 530 of the so-called MC (Moving Coil) style, and an acceleration sensor 540. The linear motor 530 includes a stator 510 and a mover 520. The stator 510 is configured with permanent magnets arranged therein while the mover 520 is configured with armature coils arranged therein and has the acceleration sensor 540 attached thereto. The mover 520 moves in a direction along the extension of the stator 510.

The motor control device 400 has the power conversion unit 46 and a control unit 410. The power conversion unit 46 supplies voltage and current according to a PWM signal applied from the control unit 410, to the mover 520 of the linear motor 530 via a power line 550. In this manner, position and speed of the mover 520 are controlled. The control unit 410 obtains a detected acceleration signal $A_{fb}$ output from the acceleration sensor 540 via a signal line 560 and produces the PWM signal output to the power conversion unit 46 based on the position and speed of the linear motor 530 estimated based upon the detected acceleration signal $A_{fb}$.

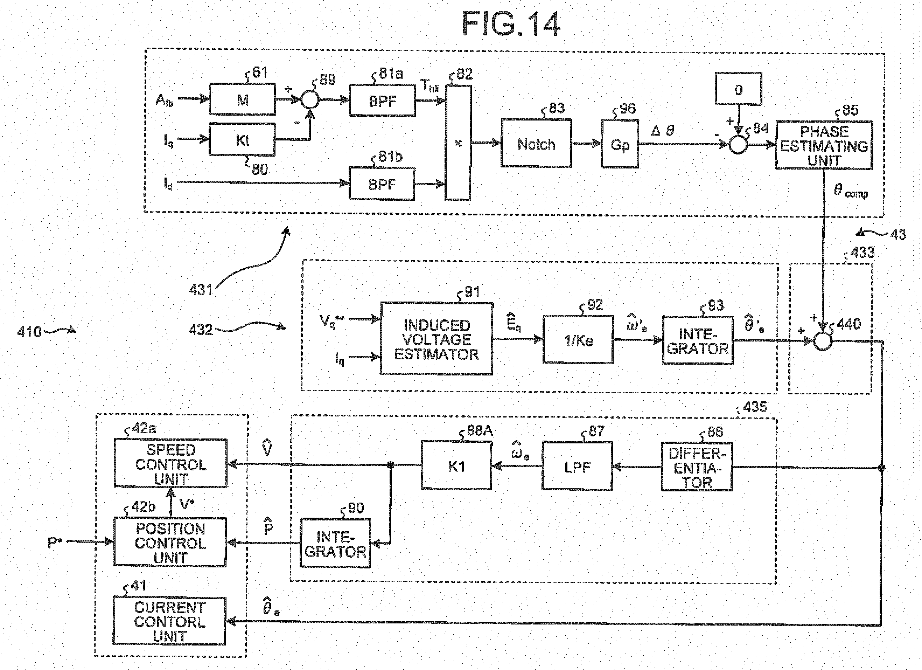

FIG. 14 is a diagram illustrating a configuration example of the control unit 410. As illustrated in FIG. 14, the control unit 410 is what is the first estimating unit 431 of the estimating unit 43 in the control unit 40 illustrated in FIG. 6B and FIG. 7B which additionally includes a calculator 61. Also, an amplifier 88A is replaced with the mechanical angle calculating unit 88 illustrated in FIG. 6B and FIG. 7B.

The calculator 61 produces a torque signal by multiplying the detected acceleration signal $A_{fb}$ by M and then produces a torque signal to the BPF 81a. Such multiplication of the detected acceleration signal $A_{fb}$ by M brings about a value of the detected acceleration signal $A_{fb}$ converted to torque. M denotes a mass of the mover 520.

An amplifier 88B multiplies a noise-eliminated estimated electrical angular speed $\omega_e{}^{\wedge}$ by K1 to convert it to an estimated velocity $v^{\wedge}$ of the mover 520. The estimated velocity $v^{\wedge}$ is input to the speed control unit 42a. K1 is a conversion coefficient between the electrical angular speed $\omega_e$ and the speed of the mover 520, and, for example, is set to a value in accordance with a mechanical configuration, such as a magnetic pole pitch. The integrator 90 integrates the estimated velocity $v^{\wedge}$ and outputs an estimated position $P^{\wedge}$ as an estimated value of a position P. The position control unit 42b produces a speed command $v^*$ so that a deviation between the estimated position $P^{\wedge}$ and the position command $P^*$ becomes zero while the speed control unit 42a produces a q-axial current command $Iq^*$ so that a deviation between the speed command $v^*$ and the estimated velocity $v^{\wedge}$ becomes zero (see FIG. 6B and FIG. 7B).

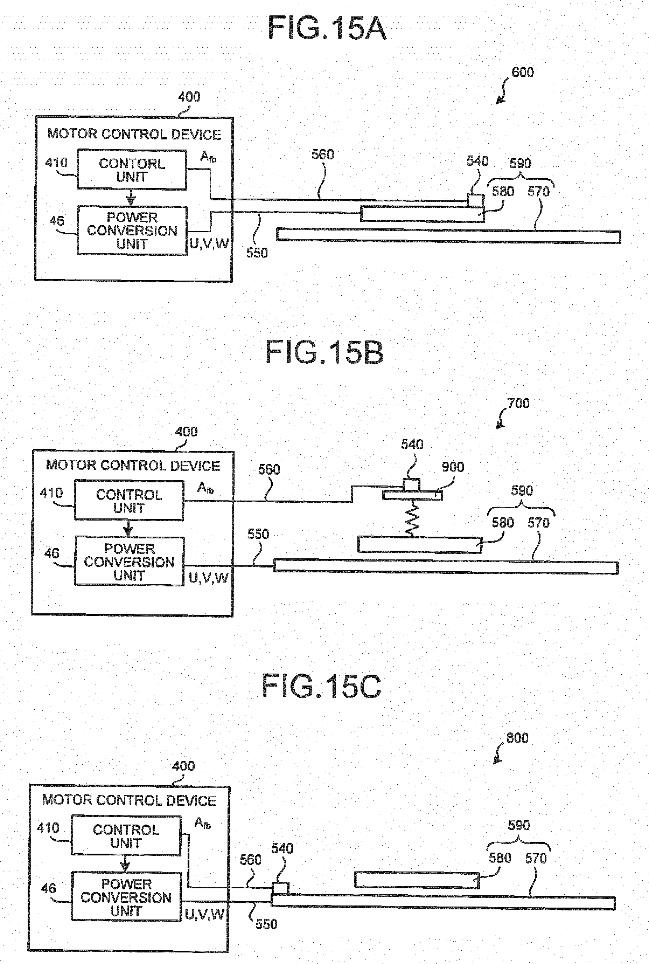

The linear motor 530 illustrated in FIG. 13 has a configuration where coils are provided in the mover 520, and the coils may be provided in the stator. FIG. 15A is a diagram illustrating a configuration of another motor drive system with a linear motor. In a motor drive system 600 illustrated in FIG. 15A, armature coils are arranged in a stator 570 of a linear motor 590, and permanent magnets are arranged in a mover 580 of the linear motor 590. The motor control device 400 causes the power conversion unit 46 to supply voltage and current according to a PWM signal to the stator 570 of the linear motor 590 and controls position and speed of the mover 580.

Although, regarding examples illustrated in FIG. 13 and FIG. 15A, the acceleration sensor 540 is attached to the movers 520 and 580 of the linear motors 530 and 590, respectively, the acceleration sensor 540 may be attached to a load 900 of an oscillating system fixed to the mover 580 like a motor drive system 700 illustrated in FIG. 15B. FIG. 15B is a diagram illustrating a configuration of another motor drive system using a linear motor. In such a case, a detected acceleration signal $A_{fb}$ by the acceleration sensor 540 may be used to suppress oscillation of the load 900.

When it is possible to use reaction of the stator 570, the acceleration sensor 540 may be attached thereto like a motor drive system 800 illustrated in FIG. 15C. FIG. 15C is a diagram illustrating a configuration of another motor drive system using a linear motor. Although the motor drive systems 700 and 800 illustrated in FIG. 15B and FIG. 15C have been described as configuration examples where the armature coils are arranged in the stator 570, such configurations may be applied to the motor drive system having the configuration illustrated in FIG. 13 where the armature coils are arranged in the mover.

Although, in the aforementioned examples, the position and speed of the linear motors 530 and 590 are estimated in the motor control device 400, at least one of the position and speed of the linear motors 530 and 590 may be estimated.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

Reference Signs List

2 Motor
3 Torque Sensor
4 Motor Control Device
6 Encoder (Position Detector)
40 Control Unit
41 Current Control Unit
42 Position/Speed control Unit
42a Speed control Unit
42b Position Control Unit
43 Estimating Unit
45 Wave-Detection High-Frequency Current Commander
70 Three-Phase/dg Coordinate Converter (Current Component Detecting Unit)
81a BPF (Oscillation Component Extracting Unit)
100, 200 Motor Drive Systems
431 1st Estimating Unit
432 2nd Estimating Unit

**Claims**

1. A motor drive system comprising:

a motor;
a motor control device that controls the motor; and
a sensor that detects torque or acceleration of the motor,
the motor control device comprising:

an estimating unit configured to estimate at least one of speed and position of the motor; and
a current control unit configured to control current to be supplied to the motor based upon an estimation
result by the estimating unit,

the estimating unit comprising:

a first estimating unit configured to estimate at least one of the speed and position of the motor based upon
a detection signal detected by the sensor and a high-frequency current component superimposed on an
output current to the motor; and
a second estimating unit configured to estimate induced voltage of the motor and to estimate at least one
of the speed and position of the motor from an estimation result of the induced voltage, wherein

the estimating unit derives an estimated value of at least one of the speed and position of the motor based upon
estimation results by the first and second estimating units.

2. The motor drive system according to claim 1, wherein the motor is a rotary motor, and
the sensor is a torque sensor.

3. The motor drive system according to claim 2, wherein the torque sensor is disposed between a load and an output
shaft of the rotary motor or between the rotary motor and a member fixing the load.

4. The motor drive system according to claim 1, wherein
the motor is a linear motor, and
the sensor is an acceleration sensor.

5. The motor drive system according to claim 4, wherein the acceleration sensor is attached to a mover or a stator of
the linear motor.

6. The motor drive system according to any one of claims 1 to 5, further comprising a high-frequency current commander
that generates a high-frequency current command to superimpose the high-frequency current component on the
output current to the motor.

7. The motor drive system according to any one of claims 1 to 5, wherein
the estimating unit further comprises a summing unit configured to sum the estimation results from the first and
second estimating units, and
the estimating unit derives the estimated value of at least one of the speed or position of the motor based upon a
summed value by the summing unit.

8. The motor drive system according to any one of claims 1 to 5, wherein the estimating unit derives the estimated
value of at least one of the speed and position of the motor based upon the estimation results by the first and second
estimating units when the speed of the motor exceeds a predetermined value and based upon the estimation result
by the first estimating unit when the speed of the motor is lower than the predetermined value.

9. The motor drive system according to any one of claims 1 to 5, wherein
the current control unit comprises a current component detecting unit configured to detect a q-axial current in a dq-
axis rotary coordinate system synchronized with the motor, based upon a detected current value from the motor
and the estimation results by the estimating unit,
the first estimating unit comprises an oscillation component extracting unit configured to extract an oscillation component in the torque caused by phase shift, based upon a detected torque signal by the torque sensor and the q-axial current detected by the current component detecting unit.

10. A motor control device, comprising:

an estimating unit configured to estimate at least one of speed and position of a motor; and
a current control unit configured to control current to be supplied to the motor based upon an estimation result by the estimating unit,
the estimating unit comprising:

a first estimating unit configured to estimate at least one of the speed and position of the motor based upon a detection signal detected by a sensor that detects torque or acceleration of the motor and a high-frequency current component superimposed on an output current to the motor; and
a second estimating unit configured to estimate induced voltage of the motor and to estimate at least one of the speed and position of the motor from an estimation result, wherein

the estimating unit derives an estimated value of at least one of the speed and position of the motor based upon estimation results by the first and second estimating units.

11. The motor control device according to claim 10, further comprising
a high-frequency current commander that outputs a high-frequency current command to superimpose the high-frequency current component on the output current to the motor.

FIG.1

MOTOR CONTROL
DEVICE

# FIG.2

# FIG.3

# FIG.4

# FIG.5A

```
            100
                                        ┌─ 21
                                  ┌─ 2a
        ┌─ 40
  ┌─────────────────┐     ┌─────────────────────────────┐   ┌──────────┐
  │ CURRENT         │     │  ┌─ 2        ┌─ 3            │   │ ┌─ 12a   │
41│ CONTROL UNIT    │     │ ┌──────┐   ┌─────────┐       │   │ 1ST ARM  │
  ├─────────────────┤ ──► │ │MOTOR │─► │ TORQUE  │       │   │ MEMBER   │
  │ POSITION/SPEED  │     │ └──────┘   │ SENSOR  │       │   │ (LOAD)   │
42│ CONTROL UNIT    │     │            └─────────┘       │   └──────────┘
  ├─────────────────┤     └─────────────────────────────┘
43│ ESTIMATING UNIT │◄──────────────  T_fb
  └─────────────────┘
```

# FIG.5B

```
         100
                                         ┌─ 21
                                              ┌─ 5a
        ┌─ 40
  ┌─────────────────┐   ┌──────────────────────────────────────┐  ┌──────────┐
  │ CURRENT         │   │  ┌─ 2       ┌─ 5       ┌─ 3          │  │ ┌─ 12a   │
41│ CONTROL UNIT    │   │ ┌──────┐  ┌────────┐  ┌─────────┐    │  │ 1ST ARM  │
  ├─────────────────┤──►│ │MOTOR │─►│ SPEED  │─►│ TORQUE  │    │─►│ MEMBER   │
  │ POSITION/SPEED  │   │ └──────┘  │ REDUC- │  │ SENSOR  │    │  │ (LOAD)   │
42│ CONTROL UNIT    │   │           │ ER     │  └─────────┘    │  └──────────┘
  ├─────────────────┤   │           └────────┘                 │
43│ ESTIMATING UNIT │◄──────────────  T_fb
  └─────────────────┘
```

FIG.6A

# FIG.6B

EP 3 038 249 A1

# FIG.7A

EP 3 038 249 A1

# FIG.7B

EP 3 038 249 A1

# FIG.8

# FIG.9

# FIG.10

200

40

41 — CURRENT CONTORL UNIT

42 — POSITION/SPEED CONTROL UNIT

7 — DETERMINING UNIT

$\hat{P}_m$

43 — ESTIMATING UNIT

21

2    25    3

MOTOR        TORQUE SENSOR

12a

1ST ARM MEMBER (LOAD)

6

ENCODER

$\theta_{fb}$

$T_{fb}$

# FIG.11A

EP 3 038 249 A1

FIG.11B

# FIG.11C

EP 3 038 249 A1

# FIG.12A

# FIG.12B

# FIG.13

500

MOTOR CONTROL DEVICE 400

410 CONTROL UNIT

$A_{fb}$

46 POWER CONVERSION UNIT

U,V,W

560

540  530
520  510

550

# FIG.14

# FIG.15A

# FIG.15B

# FIG.15C

## INTERNATIONAL SEARCH REPORT

| | International application No. |
|---|---|
| | PCT/JP2013/072116 |

**A. CLASSIFICATION OF SUBJECT MATTER**
*H02P21/00*(2006.01)i, *H02P25/06*(2006.01)i, *H02P27/04*(2006.01)i

According to International Patent Classification (IPC) or to both national classification and IPC

**B. FIELDS SEARCHED**

Minimum documentation searched (classification system followed by classification symbols)
H02P21/00, H02P25/06, H02P27/04

Documentation searched other than minimum documentation to the extent that such documents are included in the fields searched
Jitsuyo Shinan Koho          1922–1996     Jitsuyo Shinan Toroku Koho    1996–2013
Kokai Jitsuyo Shinan Koho    1971–2013     Toroku Jitsuyo Shinan Koho    1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2008-220100 A  (JTEKT Corp.),<br>18 September 2008 (18.09.2008),<br>claims; paragraphs [0017] to [0067]; fig. 1 to 11<br>(Family: none) | 1-8,10-11<br>9 |
| Y<br>A | JP 2010-11709 A  (JTEKT Corp.),<br>14 January 2010 (14.01.2010),<br>paragraphs [0012], [0020], [0063] to [0070]<br>& US 2011/0098888 A1    & EP 2296264 A1<br>& WO 2010/001579 A1    & CN 102067438 A | 1-8,10-11<br>9 |
| A | JP 2010-29030 A  (JTEKT Corp.),<br>04 February 2010 (04.02.2010),<br>claims; paragraphs [0061] to [0062]<br>(Family: none) | 1-11 |

| ☒ Further documents are listed in the continuation of Box C. | ☐ See patent family annex. |
|---|---|

\*    Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>06 September, 2013 (06.09.13) | Date of mailing of the international search report<br>17 September, 2013 (17.09.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/072116

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-171798 A  (Fuji Electric Co., Ltd.), 14 June 2002 (14.06.2002), entire text; all drawings (Family: none) | 1-11 |
| A | JP 2006-14397 A  (Daikin Industries, Ltd.), 12 January 2006 (12.01.2006), entire text; all drawings (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009095154 A